# EUROPÄISCHE PATENTSCHRIFT

(11) **EP 4 558 291 B1**
(45) Veröffentlichungstag und Bekanntmachung des Hinweises auf die Patenterteilung: **19.08.2026**
(21) Anmeldenummer: 23736280.1
(22) Anmeldetag: 28.06.2023
(51) Int. Cl.: B08B 9/20, B08B 9/44, B65G 29/02, B65G 47/82, B65G 47/84

(54) **SCHEIBENWELLE FÜR EINE AUF- UND/ODER ABGABEVORRICHTUNG ZUR BEHÄLTERBEHANDLUNG**
PLATE SHAFT FOR A PICK-UP AND/OR SET-DOWN DEVICE FOR CONTAINER HANDLING
ARBRE DE PLAQUE POUR UN DISPOSITIF DE PRÉHENSION ET/OU DE DÉPOSE POUR LA MANUTENTION DE RÉCIPIENT

(30) Priorität: 19.07.2022 DE 102022117996
(43) Veröffentlichungstag der Anmeldung: 28.05.2025
(73) Patentinhaber: KHS GmbH, 44143 Dortmund (DE)
(72) Erfinder: GENCAN, Engin, 59425 Unna (DE); SCHWEDE, Norbert, 59379 Selm (DE); SLOWAK, Thorsten, 44799 Bochum (DE); PREUSS, Ruediger, 44797 Bochum (DE); TAYLOR, Marco, 58640 Iserlohn (DE)
(86) Internationale Anmeldenummer: PCT/EP2023/067601
(87) Internationale Veröffentlichungsnummer: WO 2024/017588

(56) Entgegenhaltungen:
- DE-A1- 3 609 757
- US-A- 2 128 192
- US-A- 3 110 387

## Beschreibung

Die Erfindung betrifft eine Scheibenwelle für eine Auf- und/oder Abgabevorrichtung zur Behälterbehandlung sowie eine Auf- und/oder Abgabevorrichtung zur parallelen Auf- und/oder Abgabe von Behältern, insbesondere für eine Behälterreinigungsmaschine.

Auf- und/oder Abgabevorrichtungen mit einer Scheibenwelle sind aus dem Stand der Technik in vielfältiger Ausgestaltung bekannt und werden gängig verwendet, um zu behandelnde Behälter, beispielsweise zu reinigende Mehrwegflaschen, in eine Behälterbehandlungsvorrichtung aufzugeben oder daraus abzugeben. Dazu weist eine solche Abgabevorrichtung eine Scheibenwelle mit mehreren, auf einer gemeinsamen Scheibenwellenachse angeordneten Auf- und/oder Abgabescheiben mit jeweils einem oder zwei Fingern zum Verlagern eines Behälters aus einer ersten Position in eine zweite Position auf.

Aus der DE 25 35 064 A1 ist bereits eine Abgabevorrichtung für Gefäße aus einer Reinigungsmaschine bekannt, die eine rotierende Scheibe mit zwei Fingern zum Absenken und Abgeben eines gereinigten Gefäßes aufweist.

Eine solche Vorrichtung hat jedoch die Nachteile, dass beim Betrieb der Scheiben mit den zwei Fingern starke Beschleunigungs- und Verzögerungskräfte auftreten, woraus ein hoher Verschleiß der Bauteile der Scheibenwelle und einer diese Scheibenwelle antreibenden Antriebsvorrichtung resultiert. Zudem führt die schnelle Rotation der Scheibenwelle bei einem Betrieb mit hohem Behälterdurchsatz zu einer nicht optimalen Auf- bzw. Abgabe der Behälter, sodass es zu einem ungenauen Behältertransport, einer unerwünschten Lärmentwicklung sowie generell zu einem nicht optimalen Betrieb der Auf- und/oder Abgabevorrichtung mit Fehlern und daraus resultierenden Betriebsunterbrechungen kommt.

Die US 2,128,192 A offenbart eine Vorrichtung gemäß dem Oberbegriff des Anspruchs 1 und betrifft eine Vorrichtung zum Laden oder Zuführen von Behältern auf ein Förderband, insbesondere in Verbindung mit Behälterreinigungsmaschinen. Dabei werden Behälter, wie beispielsweise Flaschen, von einem Förderband, auf dem sie in aufrechter Position in die Maschine befördert werden, in Flaschenaufnahmetaschen eines endlosen, intermittierend vorwärtslaufenden Förderbands übergeben, um die Flaschen von einer Ladestation in liegender Position zu den Reinigungseinrichtungen der Maschine zu transportieren. Dazu ist eine Vorrichtung zum Zuführen der Behälter in die Taschen einschließlich eines beweglichen Behältertransportelements mit einer Vielzahl in Reihe angeordneter Behälterboden-Eingriffsabschnitten vorgesehen.

Die US 3,110,387 A betrifft eine Flaschenhandhabungsvorrichtung zum Entladen von Flaschenreihen aus einer Flaschenwaschmaschine und zum Ablegen der Reihen auf einer horizontalen Oberfläche mit einer Vielzahl von drehbaren Nockenelementen sowie einer Vielzahl von zusammenwirkenden Paaren von ersten und zweiten Stützflächen auf jedem der Nockenelemente. Dabei sind die Stützflächen derart gebildet, dass sie mit dem Boden bzw. der Seite einer Flasche in Kontakt kommen. Dabei ist jedes der zusammenwirkenden Paare von ersten und zweiten Stützflächen so gebildet, dass es eine Flasche trägt, wenn die Nockenelemente gedreht werden, um dadurch eine Vielzahl von Reihen aus der Waschmaschine zu entladen und sie auf einer horizontalen Oberfläche für jede Umdrehung der Nockenelemente abzulegen.

Der Erfindung liegt daher die Aufgabe zugrunde, eine Scheibenwelle für eine Auf- und/oder Abgabevorrichtung bereitzustellen, die auch bei einem hohen Behälterdurchsatz eine fehlerfreie Auf- bzw. Abgabe der Behälter ermöglicht, wobei die auftretenden Kräfte und somit der damit einhergehende Verschleiß minimiert sowie ein genauer Behältertransport mit einer geringen Lärmentwicklung erreicht wird.

Die Aufgabe wird erfindungsgemäß durch eine Scheibenwelle für eine Auf- und/oder Abgabevorrichtung nach Anspruch 1 sowie durch eine Auf- und/oder Abgabevorrichtung nach Anspruch 13 gelöst. Vorteilhafte Weiterbildungen der Erfindung sind in den abhängigen Ansprüchen angegeben.

Die erfindungsgemäße Scheibenwelle für eine Auf- und/oder Abgabevorrichtung zur Behälterbehandlung, insbesondere zur parallelen Auf- und/oder Abgabe von Behältern, weist mehrere auf einer gemeinsamen Scheibenwellenachse angeordnete Auf- und/oder Abgabescheiben zum Verlagern jeweils eines Behälters aus einer ersten Position in eine zweite Position auf, wobei jede Auf- und/oder Abgabescheibe drei über den Umfang verteilte Mitnehmerfinger zum Abstützen des zu verlagernden Behälters im Bereich des Behälterbodens aufweist.

Weiterhin betrifft die Erfindung eine Auf- und/oder Abgabevorrichtung zur parallelen Auf- und/oder Abgabe von Behältern, insbesondere für eine Behälterreinigungsmaschine, mit einer erfindungsgemäßen Scheibenwelle.

Die Erfinder haben erkannt, dass durch das Anordnen von drei oder mehr Mitnehmerfingern entlang des Umfangs der Auf- und/oder Abgabescheibe diese langsamer rotiert werden kann, um einen gleichen Behälterdurchsatz wie bei einer Vorrichtung mit nur einem oder zwei Mitnehmerfingern zu erreichen. Dadurch kann nicht nur der Antrieb der Scheibenwelle kleiner dimensioniert werden, sondern es wird auch in vorteilhafter Weise die Kinematik der Antriebselemente und insbesondere die auftretenden Beschleunigungs- und Verzögerungskräfte stark reduziert. Entsprechend wird auch die Aufholzeit zwischen den Flaschenbewegungen deutlich verlängert. Zudem tritt ein geringerer Verschleiß auf, sodass die Standzeit erheblich erhöht werden kann. Schließlich ist bei der langsamer rotierenden Scheibenwelle eine dynamische Optimierung des Bewegungsablaufs erheblich einfacher, was zu einem genaueren Betrieb und einer geringeren Geräuschentwicklung führt. Jedoch mussten die Erfinder die Form und Gestaltung der Auf- und/oder Abgabescheibe grundsätzlich verändern, um nach wie vor störungsfrei die dichter aufeinander folgenden Behälter mit einem geringeren Abstand zueinander verlagern zu können.

Die Auf- und/oder Abgabevorrichtung ist erfindungsgemäß eine Vorrichtung, um mehrere Behälter zugleich von einer Position in eine andere Position zu bewegen, um die Behälter in eine weitere Vorrichtung aufzugeben oder aus einer weiteren Vorrichtung abzugeben. Die Auf- und/oder Abgabevorrichtung für Behälter wird bevorzugt im Bereich der industriellen Abfüllung von Behältern und besonders bevorzugt an einer Behälterreinigungsmaschine verwendet. Das Verlagern jedes Behälters aus der ersten Position in die zweite Position kann bei der Auf- und/oder der Abgabe eine Änderung der Orientierung und/oder der räumlichen Lage des Behälters sein, wobei eine reine Rotation, eine reine Translation oder eine Überlagerung einer Rotation und einer Translation genutzt werden kann, um von der ersten Position in die zweite Position zu gelangen.

Die Scheibenwelle ist erfindungsgemäß aus mehreren auf der Scheibenwellenachse angeordneten Auf- und/oder Abgabescheiben gebildet. Dabei wird die Scheibenwelle auch als Auf-, An- oder Abgabewelle bezeichnet. Bevorzugt sind die Auf- und/oder Abgabescheiben auf der Scheibenwelle parallel zueinander angeordnet und/oder weisen eine identische Winkelausrichtung, insbesondere in Bezug zur Scheibenwellenachse, auf. Ebenfalls bevorzugt sind alle Auf- und/oder Abgabescheiben auf der Scheibenwelle mit einem gleichen Abstand zueinander bzw. zur benachbarten Scheibe angeordnet. Dabei ist dieser Abstand bevorzugt größer als der Durchmesser eines Behälters und/oder kleiner als der doppelte Durchmesser des Behälters.

Die Scheibenwellenachse kann grundsätzlich beliebig gebildet sein und insbesondere einen beliebigen Querschnitt aufweisen. Bevorzugt weist die Scheibenwellenachse dabei einen nicht-runden Querschnitt auf. Die Scheibenwellenachse ist weiterhin bevorzugt als Welle und besonders bevorzugt als Hohlwelle gebildet. Obwohl die Scheibenwellenachse auch als Baugruppe aus mehreren Bauteilen bestehen kann, ist diese bevorzugt einstückig gebildet.

Um die bewegten Massen in vorteilhafter Weise besonders gering zu halten, sind die Auf- und/oder Abgabescheiben und insbesondere Scheibengrundkörper der Auf- und/oder Abgabescheiben bevorzugt als Leichtbaukonstruktion gebildet und weisen dazu zahlreiche Ausnehmungen auf. Besonders bevorzugt sind die Auf- und/oder Abgabescheiben und insbesondere die Scheibengrundkörper fachwerk- bzw. gerüstartig gebildet. Ganz besonders bevorzugt ist dabei das Material an nicht-tragenden Bereichen entfernt und/oder auf kraftaufnehmende Bereiche in Form von Streben reduziert.

Die Scheibenwelle, die Auf- und/oder Abgabescheiben und/oder die Scheibengrundkörper können grundsätzlich aus einem beliebigen Material gebildet sein, wobei die Bauteile der Scheibenwelle, insbesondere die Auf- und/oder Abgabescheiben, die Scheibengrundkörper, die Scheibenwellenachse, ein Gestell und/oder weitere Bauteile, bevorzugt aus Metall und besonders bevorzugt aus Edelstahl gebildet sind. Darüber hinaus kann die Auf- und/oder Abgabescheibe auch vollständig oder zumindest in Abschnitten, insbesondere in den mit einem Behälter in Kontakt gelangenden Bereichen, aus Kunststoff gebildet sein.

Der Behälter kann grundsätzlich ein beliebiges Gefäß sein, wobei der Behälter bevorzugt aus Kunststoff oder Glas ist und/oder zur Aufnahme eines Nahrungsmittels und insbesondere eines Getränks vorgesehen ist. Entsprechend ist der Behälter bevorzugt eine Flasche. Weiterhin bevorzugt ist der Behälter Teil eines Mehrwegsystems und entsprechend besonders bevorzugt eine Mehrwegflasche, insbesondere aus Glas oder aus Kunststoff.

Erfindungsgemäß weist jede Auf- und/oder Abgabescheibe drei Mitnehmerfinger auf, die gleichmäßig über den Umfang der Auf- und/oder Abgabescheibe verteilt angeordnet sind, sodass eine Aufnahme eines zu verlagernden Behälters jeweils nach einer Rotation der Scheibenwellenachse um 120° möglich ist. Entsprechend bedeutet eine gleichmäßige Verteilung der Mitnehmerfinger über den Umfang, dass bei einer drei Mitnehmerfinger aufweisenden Auf- und/oder Abgabescheibe alle 120° ein Mitnehmerfinger angeordnet ist und bei einer Auf- und/oder Abgabescheibe mit vier Mitnehmerfingern alle 90°.

Grundsätzlich kann die Auf- und/oder Abgabescheibe als Mehrfingerscheibe mit beliebig vielen Mitnehmerfingern gebildet sein, wobei die Auf- und/oder Abgabescheibe bevorzugt zwischen 3 und 5 und besonders bevorzugt zwischen 3 und 4 Mitnehmerfingern aufweist. Bei einer zu hohen Anzahl an Mitnehmerfingern besteht dagegen die Gefahr einer Kollision aufeinanderfolgender Behälter im Bereich einer Auf- und/oder Abgabescheibe, insbesondere wenn der Durchmesser der Auf- und/oder Abgabescheibe gegenüber einer nur einen oder zwei Mitnehmerfinger aufweisenden Auf- und/oder Abgabescheibe nicht vergrößert ist, um eine Kompatibilität zu einer entsprechenden Auf- und/oder Abgabevorrichtung zu erhalten.

Der Mitnehmerfinger hat dabei grundsätzlich die Funktion, den zu verlagernden Behälter im Bereich des Behälterbodens abzustützen, wobei dieses Abstützen bevorzugt während des gesamten Verlagerns und/oder während des gesamten Kontakts des Behälters zur Auf- und/oder Abgabescheibe erfolgt. Dabei berührt bevorzugt eine Oberfläche des Mitnehmerfingers kontinuierlich den Behälterboden und besonders bevorzugt stützt der Mitnehmerfinger zumindest teilweise und ganz besonders bevorzugt zumindest überwiegend das Gewicht des zu verlagernden Behälters ab. Um einen besonders schonenden Kontakt des Mitnehmerfingers am Behälter zu ermöglichen, ist der Mitnehmerfinger, zumindest in dem mit dem Behälter in Kontakt stehenden Bereich, dem Kontaktbereich, bevorzugt aus Kunststoff gebildet.

Erfindungsgemäß ist die Auf- und/oder Abgabescheibe aus wenigstens zwei an der Scheibenwellenachse festlegbaren Scheibengrundkörpern sowie einem am Scheibengrundkörper bevorzugt lösbar festgelegten, den Mitnehmerfinger aufweisenden Mitnehmerelement gebildet, wodurch ein besonders leichter Austausch des Mitnehmerfingers möglich ist sowie ein besonders einfacher Aufbau der Auf- und/oder Abgabescheibe erreicht wird.

Erfindungsgemäß ist die Auf- und/oder Abgabescheibe aus zwei aneinander angeordneten sowie die Scheibenwellenachse gemeinsam umgebenden Scheibengrundkörpern gebildet, wobei an einem Scheibengrundkörper ein Mitnehmerelement und an dem anderen Scheibengrundkörper zwei Mitnehmerelemente angeordnet sind. Durch eine Teilung der Auf- und/oder Abgabescheibe in wenigstens zwei Scheibensegmente aus jeweils einem Scheibengrundkörper wird eine besonders einfache Festlegung bzw. Montage der Auf- und/oder Abgabescheibe an der Scheibenwellenachse ermöglicht. Dabei umgeben alle Scheibensegmente einer Auf- und/oder Abgabescheibe die Scheibenwellenachse gemeinsam im Wesentlichen vollständig. Bevorzugt weist eine Auf- und/oder Abgabescheibe 2 - 4 und besonders bevorzugt 2 - 3 Scheibensegmente auf. Weiterhin bevorzugt sind alle Auf- und/oder Abgabescheiben der Scheibenwelle aus einer identischen Anzahl an Scheibensegmenten und/oder Scheibengrundkörpern gebildet. Besonders bevorzugt sind alle Auf- und/oder Abgabescheiben der Scheibenwelle zueinander identisch. Bei einer Gestaltung einer Auf- und/oder Abgabescheibe mit einem Mitnehmerelement an einem Scheibengrundkörper und zwei weiteren Mitnehmerelementen an einem weiteren Scheibengrundkörper sind bevorzugt die beiden Scheibengrundkörper entsprechend nicht identisch zueinander gebildet.

Gemäß einer vorteilhaften Ausgestaltung der erfindungsgemäßen Scheibenwelle sind alle Mitnehmerelemente einer Auf- und/oder Abgabescheibe identisch geformt und/oder jeweils einstückig gebildet, wodurch ein Austausch besonders einfach und schnell erfolgen kann und nur ein einziges Mitnehmerelement notwendig ist. Darüber hinaus ist das Mitnehmerelement bevorzugt als plattenförmiges Kunststoffteil gebildet.

Obwohl jedes Mitnehmerelement beliebig viele Mitnehmerfinger und/oder Rücken zum Abstützen des zu verlagernden Behälters aufweisen kann, ist es bevorzugt, dass jedes Mitnehmerelement einen Mitnehmerfinger, bevorzugt genau einen Mitnehmerfinger, und einen Rücken, bevorzugt genau einen Rücken, aufweist. Dabei sind der Mitnehmerfinger und/oder der Rücken besonders bevorzugt derart gebildet, dass der Mitnehmerfinger mit dem zu verlagernden Behälter ausschließlich im Bereich des Behälterbodens und/oder der Rücken mit dem zu verlagernden Behälter ausschließlich im Bereich der Behälterseitenwand in Kontakt gelangt. Bei einer alternativen Gestaltung eines Mitnehmerelements mit einem Mitnehmerfinger und einem Rücken kann ein Mitnehmerelement auch nur einen Mitnehmerfinger oder einen Rücken aufweisen, wobei dann entlang des Umfangs der Scheibenwellenachse besonders bevorzugt Mitnehmerelemente mit einem Mitnehmerfinger und Mitnehmerelemente mit einem Rücken alternierend angeordnet werden. Ganz besonders bevorzugt sind dann wenigstens jeweils ein Mitnehmerelement mit einem Mitnehmerfinger und ein Mitnehmerelement mit einem Rücken gemeinsam an einem Scheibengrundkörper angeordnet. Wie auch hinsichtlich der Mitnehmerfinger ist es bezüglich der Rücken bevorzugt, dass diese aus einem Kunststoff und insbesondere aus dem gleichen Kunststoff wie die Mitnehmerfinger gebildet sind.

Eine bevorzugte Ausgestaltung der erfindungsgemäßen Scheibenwelle sieht vor, dass der Mitnehmerfinger derart geformt ist, dass während des gesamten Verlagerns des Behälters ausschließlich ein Kontaktpunkt des Mitnehmerfingers mit dem Behälter im Bereich des Behälterbodens und bevorzugt im Bereich der Behälterbodenmitte besteht, wodurch eine möglichst reibungsarme Führung erreicht wird. Als Kontaktpunkt gilt dabei im Sinne der Erfindung eine nicht zweidimensional ausgedehnte Kontaktfläche, d.h., ein strich- oder punktförmiger Kontaktbereich, wobei sich im Laufe des Verlagerns des Behälters dieser Kontaktpunkt auf der Oberfläche des Mitnehmerfingers verschieben kann. Jedoch besteht auch dann zu jedem Zeitpunkt des Verlagerns nur ein Kontakt zwischen dem Behälter und dem Mitnehmerfinger in einem einzigen Bereich, dem jeweiligen Kontaktpunkt. Unerwünscht ist bei dieser Ausgestaltung der Erfindung hingegen ein flächiger Kontakt und insbesondere steht der Behälter nicht flächig und/oder an mehreren Stellen auf einer Oberfläche des Mitnehmerfingers.

Eine besonders bevorzugte Ausgestaltung der erfindungsgemäßen Scheibenwelle sieht weiterhin vor, dass der Mitnehmerfinger im Bereich einer Kontaktfläche zum Herstellen eines Kontaktpunktes zu dem zu verlagernden Behälter eine stark konvex gekrümmte Oberfläche aufweist, wobei bevorzugt der Radius dieser Krümmung höchstens 50%, besonders bevorzugt höchstens 25% und ganz besonders bevorzugt höchstens 10% des Flaschendurchmessers beträgt. Der Kontaktpunkt liegt dabei bevorzugt während des gesamten Verlagerns des Behälters auf der Kontaktfläche, wobei sich der Kontaktpunkt auf der Kontaktfläche dabei verschieben kann und besonders bevorzugt sich während des Verlagerns kontinuierlich verschiebt.

Um auch im Bereich des Rückens eine besonders reibungsarme Führung des zu verlagernden Behälters zu erreichen, weist der Rücken bevorzugt im Bereich einer Kontaktfläche zu dem zu verlagernden Behälter und insbesondere ebenfalls im Bereich eines Kontaktpunktes, ebenfalls eine stark konvex gekrümmte Oberfläche auf, wobei bevorzugt der Radius dieser Krümmung höchstens 50%, besonders bevorzugt höchstens 25% und ganz besonders bevorzugt höchstens 15% des Flaschendurchmessers beträgt. Um weiterhin eine besonders dynamische Führung des zu verlagernden Behälters zu ermöglich, sieht eine vorteilhafte Weiterbildung der erfindungsgemäßen Scheibenwelle zudem vor, dass das Mitnehmerelement derart gebildet ist, dass während des gesamten Verlagerns des Behälters die Kontaktpunkte des Mitnehmerfingers zum Behälterboden und des Rückens zur Behälterseitenwand voneinander beabstandet sind und/oder kein aneinandergrenzender Kontakt des Mitnehmerfingers und zugleich des Rückens zum Behälter besteht. Besonders bevorzugt besteht kein durchgehender Kontakt und insbesondere bevorzugt generell kein Kontakt des Randes des Flaschenbodens und/oder der Flaschenseitenwand mit einem Teil des Mitnehmerelements und insbesondere mit dem Mitnehmerfinger und/oder mit dem Rücken, sodass ein Verkanten und/oder eine diskontinuierliche Führung ausgeschlossen wird.

Um ein ungehindertes und insbesondere ein kollisionsfreies Verlagern aufeinander folgenden Behälter mittels einer einzigen Auf- und/oder Abgabescheibe der Scheibenwelle zu ermöglichen, müssen die einzelnen Mitnehmerelemente entlang des Umfangs der Auf- und/oder Abgabescheibe derart an dem jeweiligen Scheibengrundkörper angeordnet sein, dass der Abstand zwischen zwei aufeinander folgenden Mitnehmerelementen, insbesondere im Bereich der Festlegung an dem Scheibengrundkörper, wenigstens genauso groß ist wie die Länge der Mitnehmerelemente in diesem Bereich bzw. in Umfangsrichtung. Die Lücken bzw. freien Abstände zwischen den einzelnen Mitnehmerelementen sind somit größer als die entlang des Umfangs eingenommene Länge bzw. als der entlang des Umfangs eingenommene Winkelabschnitt der Mitnehmerelemente.

Um eine besonders einfache Montage der Auf- und/oder Abgabescheibe an der Scheibenwellenachse sowie eine besonders präzise Positionierung zu ermöglichen, sind die Scheibengrundkörper derart an der Scheibenwellenachse angeordnet sowie aneinander festgelegt und insbesondere miteinander verschraubt, dass sich ein Festlegen an der Scheibenwellenachse durch eine Prismaklemmung ergibt und/oder jeder Scheibengrundkörper sowie die Scheibenwellenachse derart gebildet ist, dass beim Festlegen eine Selbstzentrierung und/oder eine Zwangsausrichtung aller Scheibengrundkörper gegenüber der Scheibenwellenachse erfolgt. Generell bevorzugt sind die Scheibengrundkörper bzw. die Scheibensegmente und dadurch die gesamte daraus gebildete Auf- und/oder Abgabescheibe ausschließlich durch eine Klemmung an der Scheibenwellenachse festgelegt. Dabei sind die Scheibengrundkörper und insbesondere zwei sich in Bezug zur Scheibenwellenachse gegenüberliegende Scheibengrundköper beidseitig eine Kraft auf eine Oberfläche der Scheibenwellenachse wirkend angeordnet, sodass hierdurch eine rotationsfeste und/oder translationsfeste Festlegung an der Scheibenwellenachse erreicht wird. Besonders bevorzugt erfolgt die Klemmung derart, dass auf jeden Oberflächenabschnitt entlang des Umfangs der Scheibenwellenachse und/oder zwischen der Oberfläche der Scheibenwellenachse und den Scheibengrundköpern eine Kraft aufgebracht wird.

Schließlich sieht eine alternative, bevorzugte Weiterbildung der erfindungsgemäßen Scheibenwelle vor, dass die Auf- und/oder Abgabescheibe einstückig gebildet ist und dabei eine Achsöffnung zur formschlüssigen Festlegung an der Scheibenwellenachse sowie als Mitnehmerfinger und/oder als Rücken gebildete Abschnitte aufweist, wodurch eine besonders kostengünstige und einfache Herstellung möglich ist. Weiterhin bevorzugt weist die gesamte Auf- und/oder Abgabescheibe dabei eine konstante Materialstärke auf. Ebenfalls bevorzugt ist die Auf- und/oder Abgabescheibe dann aus Kunststoff gebildet.

Mehrere Ausführungsbeispiele der erfindungsgemäßen Auf- und/oder Abgabevorrichtung sowie von Scheibenwellen werden nachstehend mit Bezug auf die Zeichnungen näher erläutert. In den Figuren zeigen:
- Fig. 1: eine perspektivische Ansicht einer Auf- und/oder Abgabevorrichtung zur Behälterbehandlung,
- Fig. 2: eine perspektivische Ansicht einer Scheibenwelle der in Fig. 1 dargestellten Auf- und/oder Abgabevorrichtung,
- Fig. 3: eine Seitenansicht der in Fig. 2 dargestellten Scheibenwelle,
- Fig. 4: eine Ansicht der Einbaulage der in den Fig. 2 und 3 dargestellten Scheibenwelle in einer Auf- und/oder Abgabevorrichtung, und
- Fig. 5: eine perspektivische Ansicht einer weiteren, nicht erfindungsgemäßen Ausführung einer Scheibenwelle mit einer einstückigen Auf- und/oder Abgabescheibe.

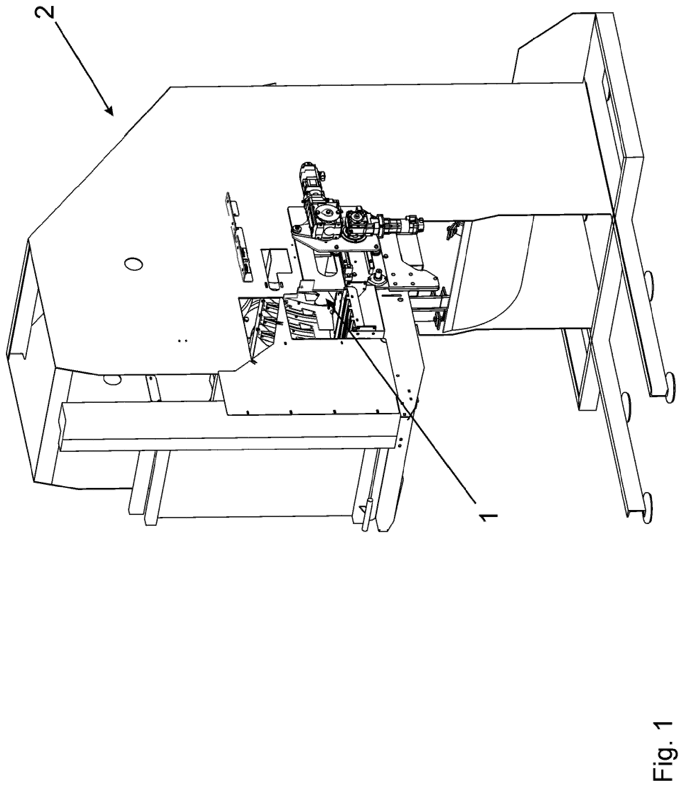

Bei einer in Fig. 1 dargestellten Ausführung einer Auf- und/oder Abgabevorrichtung 2 ist im Inneren eines Gehäuses eine Scheibenwelle 1 zur parallelen Auf- und/oder Abgabe von Behältern 5 angeordnet.

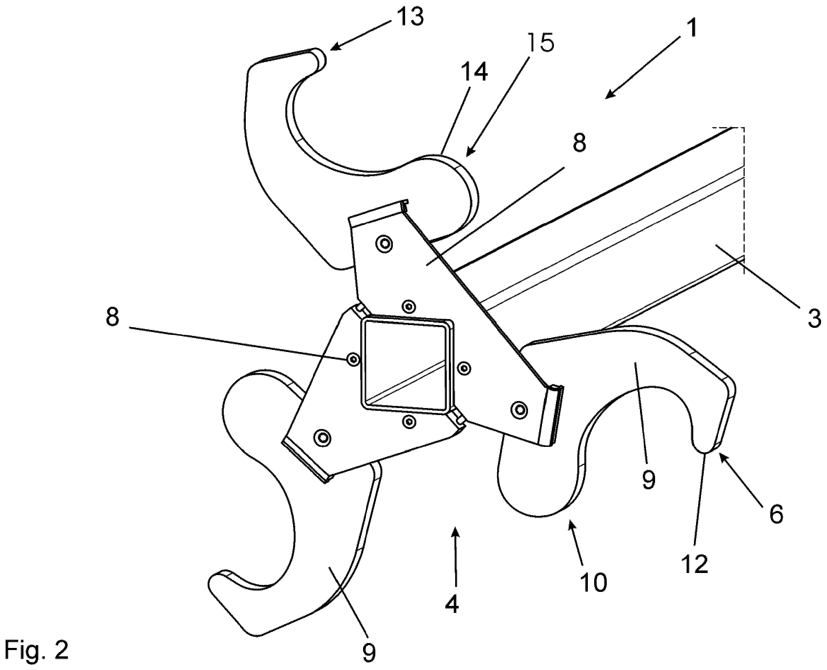

Dabei ist die Scheibenwelle 1 aus mehreren, parallel zueinander auf einer Scheibenwellenachse 3 angeordneten Auf- und/oder Abgabescheiben 4 gebildet. Die Auf- und/oder Abgabescheibe 4 ist dabei aus zwei Scheibengrundkörpern 8 aus Edelstahl gebildet, die gemeinsam die Scheibenwellenachse 3 im Wesentlichen vollständig umgeben (siehe Fig. 2). Dabei ist die Auf- und/oder Abgabescheibe 4 mittels der Scheibengrundkörper 8 ausschließlich klemmend an der Scheibenwellenachse 3 festgelegt, sodass sich aufgrund der quadratischen Querschnittsfläche der Scheibenwellenachse 3 eine Selbstzentrierung der Auf- und/oder Abgabescheibe 4 daran ergibt.

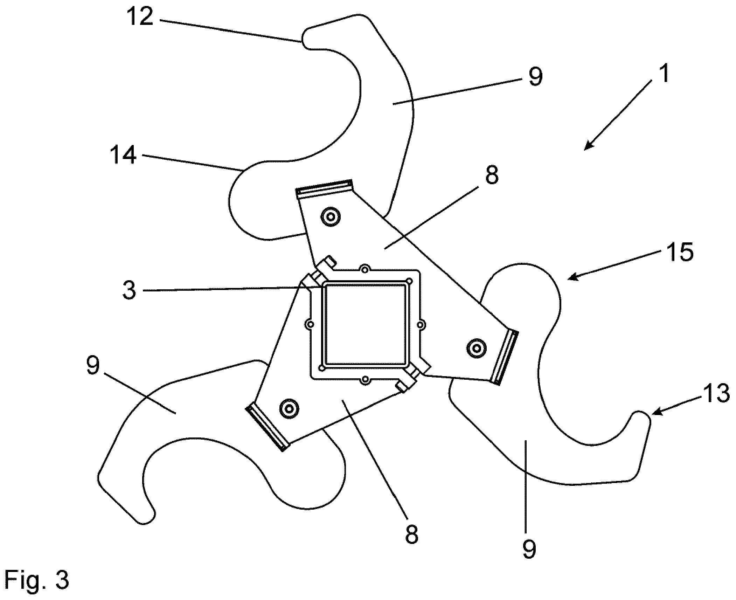

An den Scheibengrundkörpern 8 der Auf- und/oder Abgabescheibe 4 sind gleichmäßig über den Umfang drei Mitnehmerelemente 9 verteilt angeordnet (siehe Fig. 3), wobei die Mitnehmerelemente 9 jeweils einstückig und aus Kunststoff gebildet sind. Um die Mitnehmerelemente 9 besonders leicht austauschen zu können, sind diese an den Scheibengrundkörpern 8 festgelegt.

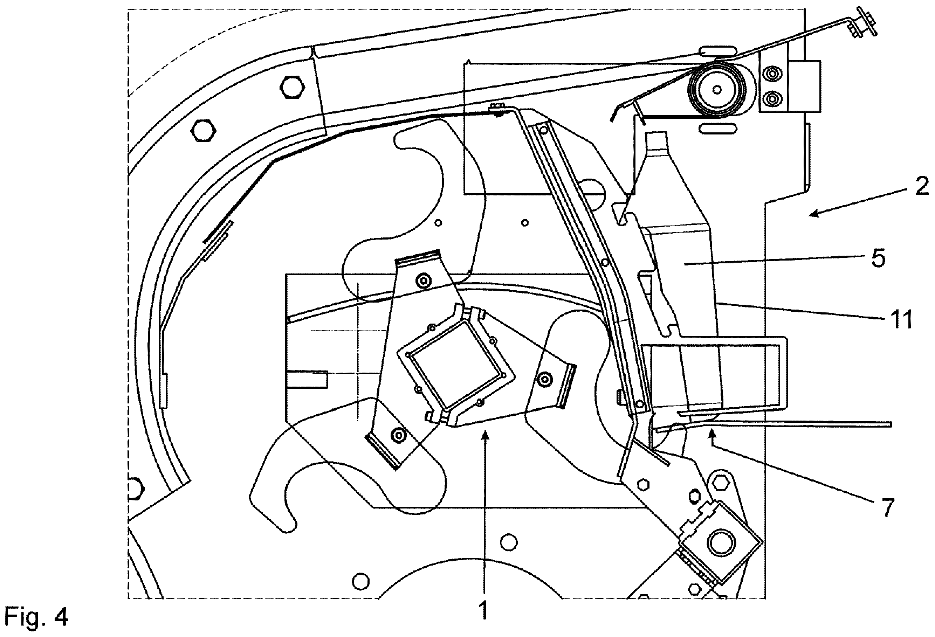

Jedes Mitnehmerelement 9 weist dabei einen Mitnehmerfinger 6 zum Heben oder Senken eines Behälters 5 im Bereich des Behälterbodens 7 sowie einen Rücken 10 zum Abstützen des Behälters 5 im Bereich einer Behälterseitenwand 11 auf. Der Mitnehmerfinger 6 und der Rücken 10 weisen jeweils eine stark konvex gekrümmte Oberfläche 13, 15 auf, sodass ein mittels der Auf- und/oder Abgabescheibe 4 verlagerter Behälter 5 während der gesamten Bewegung nur mit einer strichförmigen Kontaktfläche 12, 14 des Mitnehmerfingers 6 und des Rückens 10 in Kontakt steht (siehe Fig. 4), sodass ein besonders leichtes und reibungsarmes Gleiten des Behälters 5 an dem Mitnehmerelement 9 ermöglicht wird.

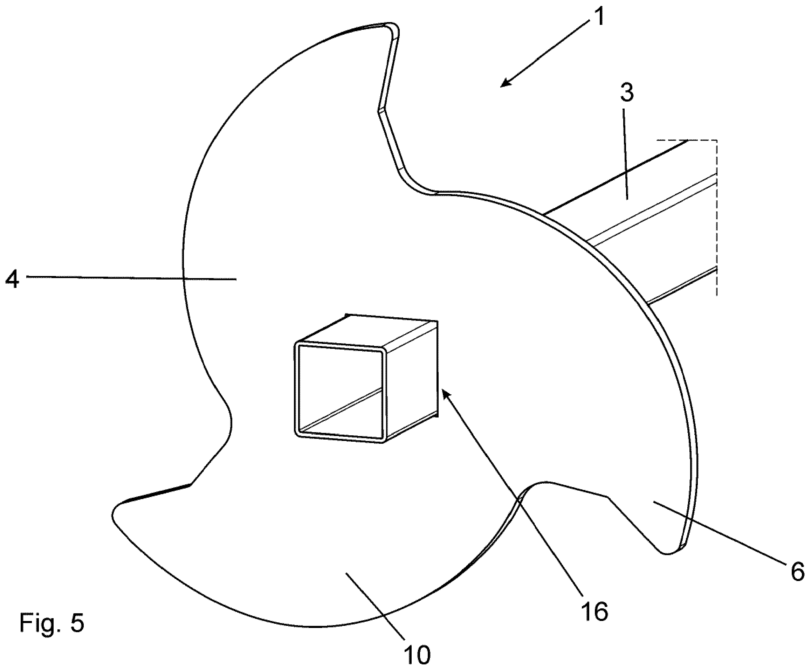

Eine in Fig. 5 dargestellte, alternative und nicht erfindungsgemäße Auf- und/oder Abgabescheibe 4 ist einstückig aus Kunststoff gebildet und weist ebenfalls drei gleichmäßig über den Umfang verteilte Mitnehmerfinger 6 sowie Rücken 10 auf. Ein Festlegen der Auf- und/oder Abgabescheibe 4 erfolgt dabei ausschließlich formschlüssig mittels einer Achsöffnung 16 der Auf- und/oder Abgabescheibe 4, die an die Form der Querschnittsfläche der Scheibenwellenachse 3 angepasst ist. Auch bei dieser Ausführung sind der Bereich des Mitnehmerfingers 6 sowie des Rückens 10 derart gebildet, dass der zu verlagernde Behälter 6 zu jedem Zeitpunkt nur an zwei Kontaktpunkten an der Auf- und/oder Abgabescheibe 4 anliegt.

### Bezugszeichenliste

- 1: Scheibenwelle
- 2: Auf- und/oder Abgabevorrichtung
- 3: Scheibenwellenachse
- 4: Auf- und/oder Abgabescheibe
- 5: Behälter
- 6: Mitnehmerfinger
- 7: Behälterboden
- 8: Scheibengrundkörper
- 9: Mitnehmerelement
- 10: Rücken
- 11: Behälterseitenwand
- 12: Kontaktfläche des Mitnehmerfingers
- 13: konvex gekrümmte Oberfläche des Mitnehmerfingers
- 14: Kontaktfläche des Rückens
- 15: konvex gekrümmte Oberfläche des Rückens
- 16: Achsöffnung

## Patentansprüche

1. Scheibenwelle (1) für eine Auf- und/oder Abgabevorrichtung (2) zur Behälterbehandlung, mit
- mehreren auf einer gemeinsamen Scheibenwellenachse (3) angeordneten Auf- und/oder Abgabescheiben (4) zum Verlagern jeweils eines Behälters (5) aus einer ersten Position in eine zweite Position, wobei
- jede Auf- und/oder Abgabescheibe (4) drei über den Umfang verteilte Mitnehmerfinger (6) zum Abstützen des zu verlagernden Behälters (5) im Bereich des Behälterbodens (7) aufweist,
**dadurch gekennzeichnet, dass**
- die Auf- und/oder Abgabescheibe (4) aus zwei aneinander angeordneten sowie die Scheibenwellenachse (3) gemeinsam umgebenden Scheibengrundkörpern (8) gebildet ist, wobei
- an einem Scheibengrundkörper (8) ein einen Mitnehmerfinger (6) aufweisendes Mitnehmerelement (9) und an dem anderen Scheibengrundkörper (8) zwei, jeweils einen Mitnehmerfinger (6) aufweisende Mitnehmerelemente (9) angeordnet sind.

2. Scheibenwelle für eine Auf- und/oder Abgabevorrichtung nach Anspruch 1, **dadurch gekennzeichnet, dass** das Mitnehmerelement (9) lösbar am Scheibengrundkörper (8) festgelegt ist und den Mitnehmerfinger (6) aufweist.

3. Scheibenwelle für eine Auf- und/oder Abgabevorrichtung nach Anspruch 1, **dadurch gekennzeichnet, dass** jedes Mitnehmerelement (9) einen Mitnehmerfinger (6) und/oder einen Rücken (10) zum Abstützen des Behälters (5) im Bereich einer Behälterseitenwand (11) aufweist.

4. Scheibenwelle für eine Auf- und/oder Abgabevorrichtung nach wenigstens einem der vorhergehenden Ansprüche, **dadurch gekennzeichnet, dass** alle Mitnehmerelemente (9) einer Auf- und/oder Abgabescheibe (4) identisch geformt und/oder jeweils einstückig gebildet sind.

5. Scheibenwelle für eine Auf- und/oder Abgabevorrichtung nach wenigstens einem der vorhergehenden Ansprüche, **dadurch gekennzeichnet, dass** jedes Mitnehmerelement (9) genau einen Mitnehmerfinger (6) und genau einen Rücken (10) aufweist, wobei diese derart gebildet sind, dass der Mitnehmerfinger (6) mit dem zu verlagernden Behälter (5) ausschließlich im Bereich des Behälterbodens (7) und der Rücken (10) mit dem zu verlagernden Behälter (5) ausschließlich im Bereich der Behälterseitenwand (11) in Kontakt gelangt.

6. Scheibenwelle für eine Auf- und/oder Abgabevorrichtung nach wenigstens einem der vorhergehenden Ansprüche, **dadurch gekennzeichnet, dass** der Mitnehmerfinger (6) derart geformt ist, dass während des gesamten Verlagerns des Behälters (5) ausschließlich ein Kontaktpunkt des Mitnehmerfingers (6) mit dem Behälter (5) im Bereich der Behälterbodenmitte besteht.

7. Scheibenwelle für eine Auf- und/oder Abgabevorrichtung nach wenigstens einem der vorhergehenden Ansprüche, **dadurch gekennzeichnet, dass** der Mitnehmerfinger (6) im Bereich einer Kontaktfläche (12) zum Herstellen eines Kontaktpunktes zu dem zu verlagernden Behälter (5) eine konvex gekrümmte Oberfläche (13) aufweist, wobei der Radius dieser Krümmung höchstens 10% des Durchmessers eines Behälters beträgt.

8. Scheibenwelle für eine Auf- und/oder Abgabevorrichtung nach wenigstens einem der vorhergehenden Ansprüche, **dadurch gekennzeichnet, dass** der Rücken (10) im Bereich einer Kontaktfläche (14) zum Herstellen eines Kontakts zu dem zu verlagernden Behälter (5) eine konvex gekrümmte Oberfläche (15) aufweist, wobei der Radius dieser Krümmung höchstens 15% des Durchmessers eines Behälters beträgt.

9. Scheibenwelle für eine Auf- und/oder Abgabevorrichtung nach wenigstens einem der vorhergehenden Ansprüche, **dadurch gekennzeichnet, dass** das Mitnehmerelement (9) derart gebildet ist, dass während des gesamten Verlagerns des Behälters (5) die Kontaktpunkte des Mitnehmerfingers (6) zum Behälterboden (7) und des Rückens (10) zur Behälterseitenwand (11) voneinander beabstandet sind und/oder kein aneinandergrenzender Kontakt des Mitnehmerfingers (6) und zugleich des Rückens (10) zum Behälter (5) besteht.

10. Scheibenwelle für eine Auf- und/oder Abgabevorrichtung nach wenigstens einem der vorhergehenden Ansprüche, **dadurch gekennzeichnet, dass** die einzelnen Mitnehmerelemente (9) entlang des Umfangs der Auf- und/oder Abgabescheibe (4) derart an dem jeweiligen Scheibengrundkörper (8) angeordnet sind, dass der Abstand zwischen zwei aufeinander folgenden Mitnehmerelementen (9) wenigstens genauso groß ist wie die Länge der Mitnehmerelemente (9).

11. Scheibenwelle für eine Auf- und/oder Abgabevorrichtung nach wenigstens einem der vorhergehenden Ansprüche, **dadurch gekennzeichnet, dass** die Scheibengrundkörper (8) derart an der Scheibenwellenachse (3) angeordnet sowie miteinander verschraubt sind, dass sich ein Festlegen an der Scheibenwellenachse (3) durch eine Prismaklemmung ergibt.

12. Scheibenwelle für eine Auf- und/oder Abgabevorrichtung nach wenigstens einem der vorhergehenden Ansprüche, **dadurch gekennzeichnet, dass** die Auf- und/oder Abgabescheibe (4) einstückig gebildet ist und dabei eine Achsöffnung (16) zur formschlüssigen Festlegung an der Scheibenwellenachse (3) sowie als Mitnehmerfinger (6) und als Rücken (10) gebildete Abschnitte aufweist.

13. Auf- und/oder Abgabevorrichtung (2) zur parallelen Auf- und/oder Abgabe von Behältern (5), insbesondere für eine Behälterreinigungsmaschine, mit einer Scheibenwelle (1) nach wenigstens einem der Ansprüche 1 - 12.

## Claims

1. Plate shaft (1) for a pick-up and/or set-down device (2) for container handling, with
- a plurality of pick-up and/or set-down plates (4) arranged on a common plate shaft axis (3) for moving one container (5) each from a first position to a second position, wherein
- each pick-up and/or set-down plate (4) has three carrier fingers (6) distributed over the circumference for supporting the container (5) to be moved in the region of the container bottom (7),
**characterised in that**
- the pick-up and/or set-down plate (4) is formed of two adjacent plate base bodies (8) jointly around the plate shaft axis (3), wherein
- on one plate body (8) a carrier element (9) having a carrier finger (6) is arranged and on the other plate body (8) two carrier elements (9) each having one carrier finger (6) are arranged.

2. Plate shaft for a pick-up and/or set-down device according to claim 1, **characterised in that** the carrier element (9) is fixed detachably on the plate body (8) and has the carrier finger (6).

3. Plate shaft for a pick-up and/or set-down device according to claim 1, **characterised in that** each carrier element (9) has a carrier finger (6) and/or a back (10) to support the container (5) in the area of a container side wall (11).

4. Plate shaft for a pick-up and/or set-down device according to at least one of the previous claims, **characterised in that** all the carrier elements (9) of a pick-up and/or set-down plate (4) are shaped identically and/or are each formed of one piece.

5. Plate shaft for a pick-up and/or set-down device according to at least one of the previous claims, **characterised in that** each carrier element (9) has precisely one carrier finger (6) and precisely one back (10), wherein these are formed such that the carrier finger (6) comes into contact with the container (5) to be moved exclusively in the region of the container bottom (7) and the back (10) comes into contact with the container (5) to be moved exclusively in the region of the container side wall (11).

6. Plate shaft for a pick-up and/or set-down device according to at least one of the previous claims, **characterised in that** the carrier finger (6) is shaped such that during the entire movement of the container (5) there is exclusively one contact point of the carrier finger (6) with the container (5) in the region of the centre of the container bottom.

7. Plate shaft for a pick-up and/or set-down device according to at least one of the previous claims, **characterised in that** the carrier finger (6) has a convex surface (13) in the region of a contact surface (12) to create a contact point to the container (5) to be moved, wherein the radius of this convex bend is a maximum of 10% of the diameter of a container.

8. Plate shaft for a pick-up and/or set-down device according to at least one of the previous claims, **characterised in that** the back (10) has a convex surface (15) in the region of a contact surface (14) to create a contact point to the container (5) to be moved, wherein the radius of this convex bend is a maximum of 15% of the diameter of a container.

9. Plate shaft for a pick-up and/or set-down device according to at least one of the previous claims, **characterised in that** the carrier element (9) is formed such that during the entire movement of the container (5) the contact points of the carrier finger (6) to the container bottom (7) and of the back (10) to the container side wall (11) are spaced apart from each other and/or there is no contiguous contact of the carrier finger (6) and at the same time of the back (10) to the container (5).

10. Plate shaft for a pick-up and/or set-down device according to at least one of the previous claims, **characterised in that** the individual carrier elements (9) are arranged over the circumference of the pick-up and/or set-down plate (4) in such a way on the particular plate body (8) that the distance between two consecutive carrier elements (9) is at least as great as the length of the carrier elements (9).

11. Plate shaft for a pick-up and/or set-down device according to at least one of the previous claims, **characterised in that** the plate bodies (8) are arranged on the plate shaft axis (3) and bolted to each other in such a way that fixing on the plate shaft axis (3) by prisma clamping results.

12. Plate shaft for a pick-up and/or set-down device according to at least one of the previous claims, **characterised in that** the pick-up and/or set-down plate (4) is formed as one piece and also has an axis opening (16) for form-fitting fixing on the plate shaft axis (3) and has sections configured as carrier fingers (6) and as backs (10).

13. Pick-up and/or set-down device (2) for the parallel picking-up and/or setting-down of containers (5), in particular for a container cleaning machine, with a plate shaft (1) according to at least one of claims 1 - 12.

## Revendications

1. Arbre à plaques (1) pour un dispositif d'alimentation et/ou de distribution (2) pour le traitement de contenants, avec
- plusieurs plaques d'alimentation et/ou de distribution (4) disposées sur un axe d'arbre à plaques commun (3) pour déplacer respectivement un contenant (5) d'une première position dans une deuxième position, dans lequel
- chaque plaque d'alimentation et/ou de distribution (4) présente trois doigts d'entraînement (6) répartis sur la périphérie pour soutenir le contenant (5) à déplacer dans la zone du fond de contenant (7),
**caractérisé en ce que**
- la plaque d'alimentation et/ou de distribution (4) est formée à partir de deux corps de base de plaque (8) disposés l'un sur l'autre et entourant ensemble l'axe d'arbre à plaques (3), dans lequel
- un élément d'entraînement (9) présentant un doigt d'entraînement (6) est disposé sur un corps de base de plaque (8) et deux éléments d'entraînement (9) présentant respectivement un doigt d'entraînement (6) sont disposés sur l'autre corps de base de plaque (8).

2. Arbre à plaques pour un dispositif d'alimentation et/ou de distribution selon la revendication 1, **caractérisé en ce que** l'élément d'entraînement (9) est fixé de manière amovible au corps de base de plaque (8) et présente le doigt d'entraînement (6).

3. Arbre à plaques pour un dispositif d'alimentation et/ou de distribution selon la revendication 1, **caractérisé en ce que** chaque élément d'entraînement (9) présente un doigt d'entraînement (6) et/ou un dos (10) pour soutenir le contenant (5) dans la zone d'une paroi latérale de contenant (11).

4. Arbre à plaques pour un dispositif d'alimentation et/ou de distribution selon au moins l'une quelconque des revendications précédentes, **caractérisé en ce que** tous les éléments d'entraînement (9) d'une plaque d'alimentation et/ou de distribution (4) sont de forme identique et/ou sont formés chacun d'une seule pièce.

5. Arbre à plaques pour un dispositif d'alimentation et/ou de distribution selon au moins l'une quelconque des revendications précédentes, **caractérisé en ce que** chaque élément d'entraînement (9) présente exactement un doigt d'entraînement (6) et exactement un dos (10), dans lequel ceux-ci sont formés de telle manière que le doigt d'entraînement (6) entre en contact avec le contenant (5) à déplacer exclusivement dans la zone du fond de contenant (7) et le dos (10) entre en contact avec le contenant (5) à déplacer exclusivement dans la zone de la paroi latérale de contenant (11).

6. Arbre à plaques pour un dispositif d'alimentation et/ou de distribution selon au moins l'une quelconque des revendications précédentes, **caractérisé en ce que** le doigt d'entraînement (6) est formé de telle manière qu'il existe exclusivement un point de contact du doigt d'entraînement (6) avec le contenant (5) dans la zone du milieu de fond de contenant pendant tout le déplacement du contenant (5).

7. Arbre à plaques pour un dispositif d'alimentation et/ou de distribution selon au moins l'une quelconque des revendications précédentes, **caractérisé en ce que** le doigt d'entraînement (6) présente une surface (13) incurvée de manière convexe dans la zone d'une surface de contact (12) pour établir un point de contact avec le contenant (5) à déplacer, dans lequel le rayon de ladite incurvation est au maximum de 10 % du diamètre d'un contenant.

8. Arbre à plaques pour un dispositif d'alimentation et/ou de distribution selon au moins l'une quelconque des revendications précédentes, **caractérisé en ce que** le dos (10) présente une surface (15) incurvée de manière convexe dans la zone d'une surface de contact (14) pour établir un contact avec le contenant (5) à déplacer, dans lequel le rayon de ladite incurvation est au maximum de 15 % du diamètre d'un contenant.

9. Arbre à plaques pour un dispositif d'alimentation et/ou de distribution selon au moins l'une quelconque des revendications précédentes, **caractérisé en ce que** l'élément d'entraînement (9) est formé de telle manière que pendant tout le déplacement du contenant (5), les points de contact du doigt d'entraînement (6) par rapport au fond de contenant (7) et du dos (10) par rapport à la paroi latérale de contenant (11) sont espacés les uns des autres et/ou qu'il n'existe pas de contact adjacent du doigt d'entraînement (6) et en même temps du dos (10) par rapport au contenant (5).

10. Arbre à plaques pour un dispositif d'alimentation et/ou de distribution selon au moins l'une quelconque des revendications précédentes, **caractérisé en ce que** les divers éléments d'entraînement (9) sont disposés le long de la périphérie de la plaque d'alimentation et/ou de distribution (4) de telle manière sur le corps de base de plaque (8) respectif que la distance entre deux éléments d'entraînement (9) se suivant l'un l'autre est au moins aussi grande que la longueur des éléments d'entraînement (9).

11. Arbre à plaques pour un dispositif d'alimentation et/ou de distribution selon au moins l'une quelconque des revendications précédentes, **caractérisé en ce que** les corps de base de plaque (8) sont disposés sur l'axe d'arbre à plaques (3) et sont vissés les uns aux autres de telle manière qu'il en résulte une fixation sur l'axe d'arbre à plaques (3) par un serrage prismatique.

12. Arbre à plaques pour un dispositif d'alimentation et/ou de distribution selon au moins l'une quelconque des revendications précédentes, **caractérisé en ce que** la plaque d'alimentation et/ou de distribution (4) est formée d'une seule pièce et présente ainsi une ouverture d'axe (16) pour la fixation par complémentarité de forme sur l'axe d'arbre à plaques (3) ainsi que des sections formées en tant que doigt d'entraînement (6) et en tant que dos (10).

13. Dispositif d'alimentation et/ou de distribution (2) pour l'alimentation et/ou la distribution parallèles de contenants (5), en particulier pour une machine de nettoyage de contenants, avec un arbre à plaques (1) selon au moins l'une quelconque des revendications 1 à 12.
